# EUROPEAN PATENT APPLICATION

(11) **EP 2 413 254 A1**
(43) Date of publication of application: **01.02.2012**
(21) Application number: 10305828.5
(22) Date of filing: 27.07.2010
(51) Int. Cl.: G06F 17/30

(54) **System and method for accessing collaborative multimedia content**

(71) Applicant: Alcatel Lucent, 75007 Paris (FR)
(72) Inventor: Jain, Ankur, 560045, BANGALORE (IN); Jaiswal, Sharad, 560045, BANGALORE (IN); Shrivastava, Nisheeth, 560045, Karnataka (IN)
(74) Representative: Sciaux, Edmond

(57) **Abstract**

A system and method for accessing collaborative multimedia content is disclosed. The present application relates to multimedia communication systems and particularly, to accessing collaborative multimedia content in communication systems. In places like café, airport lounges people generally spend their time listening to music that is played at such places or on their personal devices. The drawback of such system is the choice offered to people is limited; also such systems have no means to judge interests or moods of people and play the music accordingly. The present application employs a multimedia communication module that enables user's of different communication devices to connect to the module and access preferred multimedia content. It also allows setting up chat session for people with similar areas of interest. The system allows unrelated people in same surroundings to connect together. Content is shared collaboratively considering privacy and security settings.

## Description

### TECHNICAL FIELD

The present invention relates to multimedia communication systems and, more particularly, to accessing collaborative content in multimedia communication systems.

### BACKGROUND

Present day entertainment systems offer a wide variety of solutions for people to spend their free time. During waiting or idle time, people prefer to listen to music, watch videos, socialize on the networking sites or listen to online music played on radios. In public places like an airport lounge, train stations, coffee shops, restaurants and so on, people spend their time either listening to music played at such places or use their personal entertainment device such as an iPod, music player and so on. People may also initiate a chat session with their friends; join different chat rooms for discussions and the like. In case of an iPod, the choice offered for a person is limited to the files stored on his iPod. As a result, the music becomes either repetitive or boring after a period of time.

In case of online radios, they have a database containing a list of songs and allow people to request the songs available on the database only. Hence, the choice offered to people is limited. Consider a case of a coffee shop. In a coffee shop, there is a list of music files stored in the song library and options available to a person is limited to the music files in that song library. In case, a person makes a request for a song that is not available in the song library there is no mechanism to provide the requested song for the person. In an instance, a person may be in a happy mood and may wish to listen to some peppy song, but the song that is played in the coffee shop may be having a sad tune. In such a case, he may not prefer to listen to such a song as it may influence his mood. Also, in case a person likes to listen to soft music but the song that is played is a pop song he may find it too noisy as he may not be interested in such music. Hence, there is no means for identification of a person's interest or his mood and playing music accordingly.

Social networking sites such as Twitter, Facebook, Orkut etc allow a person to form networks and interact with people, but such sites lack spatial locality and fail to capture the fact that people socializing may be in the same surroundings. People cannot discuss about their surroundings and relate to each other in such situations. For instance, if two people are sitting in an airport lounge and watching a video that is played in the lounge. They may prefer to have a discussion on the video as the video may be one of their favorites. But there is no mechanism that allows the two people (who are in the same premises) to have a chat regarding the video. In addition, it requires people to be online at the same time and use their data connection, which may be an expensive affair.

In systems delivering multimedia content such as songs, videos and the like to the mobile phones, in addition to media content, profile contents are exchanged when the mobile phones come near each other. Profile information forms an inseparable part of mobile phone's wireless network address. When profile contents are exchanged, there may be a threat to security. In an example, a person may have certain confidential information linked to his profile and when his profile details become accessible to any common man there may be a compromise on his security. As a result, security problems arise in such systems and people's privacy is compromised. There is no such option to restrict the access to only limited content from being exchanged. Such systems also store the accessed profiles in their databases, which may result in unauthorized access to profile and misuse of them thereof. Furthermore, some mechanisms employ applications that are not compatible on all mobile phones.

### SUMMARY

In view of the foregoing, an embodiment herein provides a multimedia communication module for accessing collaborative multimedia content. The module configured for detecting a plurality of users who are in the vicinity of the module, determining interests of the users on receiving a request for multimedia content from the users, fetching the requested multimedia content from at least one source and sending the fetched multimedia content to a multimedia output module to output the content. The multimedia communication module is further configured for detecting users in the vicinity employing a device scanner. The multimedia communication module is further configured for determining interests of the users based on one of moods input by the user in the menu, type of content requested by the user. The module is further configured for fetching the multimedia content from at least one source wherein the source is one of a second user's device, internet, playlist, and server. The output device is at least one of a mobile phone, Personal Data Assistant (PDA), Laptop, speaker, headphone, television. The module is further configured for sending the multimedia content wherein the multimedia content is one of audio, video, animation, data. The module is further configured for categorizing users based on similar interests and inviting the users for chat sessions. The module is further configured for inviting the users for the chat sessions where the chat sessions are created on the fly.

Also, disclosed herein is a method for accessing collaborative multimedia content. The method adapted for detecting a plurality of users who are in the vicinity of the module, determining by the multimedia communication module interests of the users on receiving a request for multimedia content from the users, fetching by the multimedia communication module the requested multimedia content from at least one source and sending by the multimedia communication module the fetched multimedia content to the multimedia output module to output the content. The method is further adapted for determining interests of the users based on one of moods as input by the user in the menu, type of content requested by the user. The method is further adapted for fetching the multimedia content from at least one source wherein the source is one of a second user's device, internet, playlist, and server. The output device is at least one of a mobile phone, Personal Data Assistant (PDA), Laptop, speaker, headphone, television. The method is further adapted for sending the multimedia content wherein the multimedia content is one of audio, video, animation, data. The method is further adapted for categorizing users based on similar interests and inviting the users for chat sessions. The method is further adapted for inviting the users for the chat sessions where the chat sessions are created on the fly.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates a system for accessing multimedia content, according to embodiments as disclosed herein;

FIG. 2a illustrates architecture for multimedia communication module, FIGs 2b and 2c illustrate menu options according to embodiments as disclosed herein;

FIG. 3 depicts a flow chart for a method of accessing multimedia content, according to embodiments as disclosed herein;

FIG. 4 depicts a flow chart for obtaining multimedia content based on user requests, according to embodiments as disclosed herein;

FIG. 5 depicts a flow chart for a method of inviting users with similar interests for chat sessions, according to embodiments as disclosed herein; and

FIG. 6 depicts a flow chart for a method of offering incentives to users, according to embodiments as disclosed herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

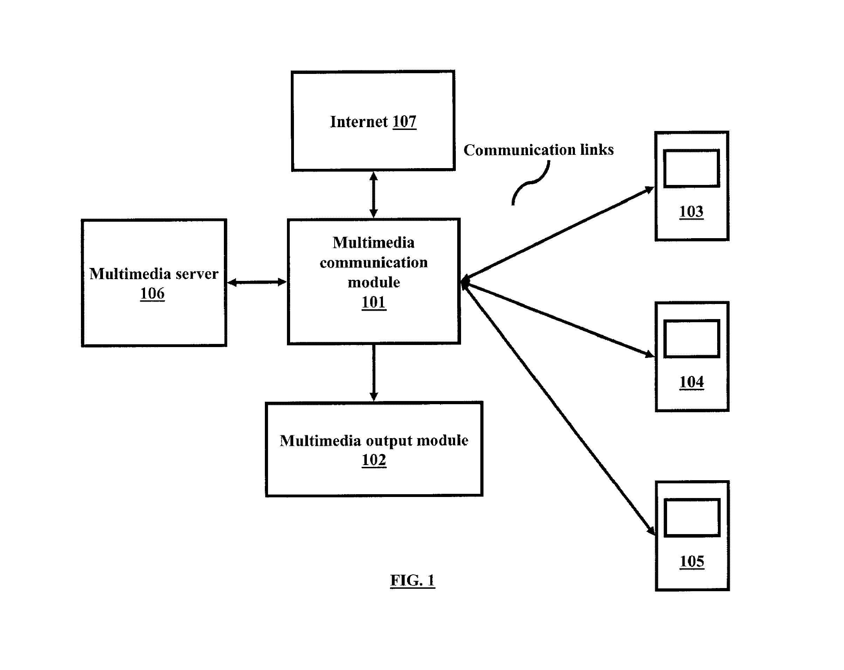

The embodiments herein disclose a system and method for accessing collaborative multimedia content through a multimedia communication device. Referring now to the drawings, and more particularly to FIGS. 1 through 6, where similar reference characters denote corresponding features consistently throughout the figures, there are shown embodiments.

System and methods for providing access to collaborative multimedia content are disclosed. The system employs a multimedia communication module for delivering multimedia content to any communication device. The multimedia content may be music files, audio or video clips, animation or any data file contents and the like. The multimedia communication module may be a device that is capable of fetching any media related content from a server or internet and delivering the fetched content on a suitable output means. The multimedia communication module may be devices such as a jukebox, play station, an intelligent module such as a Femto cell or a Pico base station and so on. Communication device instances may include mobile communication devices like a mobile phone, Personal Data Assistant (PDA), Laptops or any other portable device equipped with means to transfer collaborative multimedia content. When a communication device is detected in the range of the multimedia communication module, the multimedia communication module establishes a connection with the communication device. The connection may be established by means of a suitable connection means such as Bluetooth, Wi-Fi and the like. Further, the multimedia communication module pushes an application onto the communication device that is in its range. On installing the application, a user of the communication device is capable of accessing any multimedia content stored on the multimedia communication module. In addition, the user can also access multimedia content stored on other communication devices which are in range and communicating with the multimedia communication module. In an embodiment, the user may also configure which subset of his content may be available to other users. The user may define the files and folders which he wishes to make available to other users through the collaborative service.

In an example, if a user of mobile phone is in range of the multimedia communication module, he may accept the application and install it on his mobile phone. Further, he can view the menu list on the multimedia communication module. The menu may include details such as playlists, song library, search my mood, my interests, and chat and so on. In case, the user is interested in listening to songs, he may search for a preferred song in the song library. If the song is present in the song library, the multimedia communication module may play the song on a multimedia output module. In case the song is not present in the song library, the multimedia communication module may search for the song in mobile phones or communication devices of any other users connected to the multimedia communication module or on the internet. The system can also categorize users based on their interests for music. Categorization can also be made on the input provided by users regarding their mood.

In case of chat session, the system can identify users who are in the same surroundings and allow them to chat with each other. The system may also identify users with similar interests; similar mood etc., and invite them to engage in a chat session.

FIG. 1 illustrates a system for accessing multimedia content, according to embodiments as disclosed herein. The system comprises of a multimedia communication module 101, a multimedia output module 102, a number of communication devices 103, 104 and 105, a multimedia server 106 and internet 107. For the purposes of illustration, only mobile phones are shown in FIG.1 however, it can be any mobile communication device such as a PDA, Laptop and the like. The communication devices 103, 104 and 105 may be connected to the multimedia communication module 101 by Bluetooth, Wi-Fi, infrared or any other short range or other suitable means for connectivity. The multimedia output module may be any output device such as a personal device that includes a headphone or user's phone screen and the like where the user wishes to receive output only for himself. Further, the output device may also be devices such as speaker, television, a screen, monitor and so on where the user may share the content among other devices in his vicinity.

The multimedia communication module 101 is equipped with different sub-modules for extracting required media content and providing it to the devices. The sub-modules comprise of user interfaces, application modules, chat management module and device scanner. The multimedia communication module 101 is responsible for detecting communication devices, which are in its vicinity and establishing communication with the communication devices. On detecting a communication device in its vicinity and establishing communication with the communication devices, the multimedia communication module 101 pushes an application onto the communication device. The multimedia communication module 101 also links communication devices 103, 104 and 105, which are in range and allows them to communicate with each other. The multimedia communication module 101 accesses music files, videos, playlists and so on present in one communication device and provides it to the other communication device. The multimedia communication module 101 also fetches any content from the internet 107 if required. The multimedia communication module 101 is interfaced with a multimedia output module 102 to provide the requested output. For example, if a user has requested for a song the output may be provided on a speaker, if the request is for a video the video may be displayed on a television.

The multimedia output module 102 may be any output device interfaced with the multimedia communication module 101. The output device may be a speaker, television, a screen, a monitor and so on. In case the requested content is an audio, the audio may be output to a speaker or a set of headphones. The multimedia output modules 102 may be connected using a wired means or a wireless means to the multimedia communication module 101.

The communication devices 103, 104 and 105 may be any communication device that is capable of accessing media content. Devices such as mobile phones, PDA's, laptops and the like may be used. The communication devices 103, 104 and 105 are equipped with means such as Bluetooth, Wi-Fi etc to establish connection with the multimedia communication module 101. An application is pushed onto the communication device 103, 104 and 105 when the devices are available within the range of multimedia communication module 101 to enable seamless communications sessions between the multimedia communication module and the communication device 103, 104 and 105. In an embodiment, the application may be based on a Java (J2ME) platform that will reside on the communication device 103, 104 and 105. The application enables establishment of connection with the multimedia communication module 101 and extraction of media content.

The multimedia server 106 provides access to the content stored on it. In case if the requested multimedia content is not available on the multimedia communication module 101 or on any other communication device 103, 104 and 105, the content may be fetched from the internet 107 or other server by using multimedia server 106. The content fetched may be then provided on the multimedia communication module 101 for access to the user.

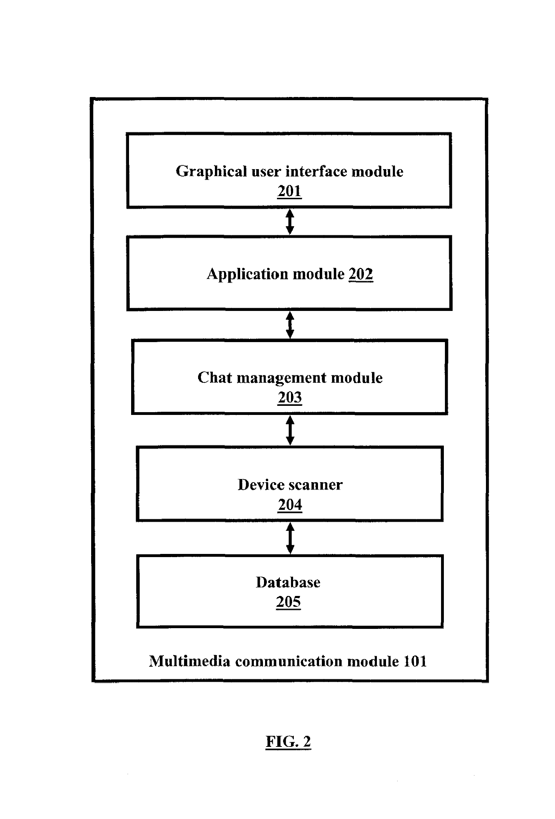

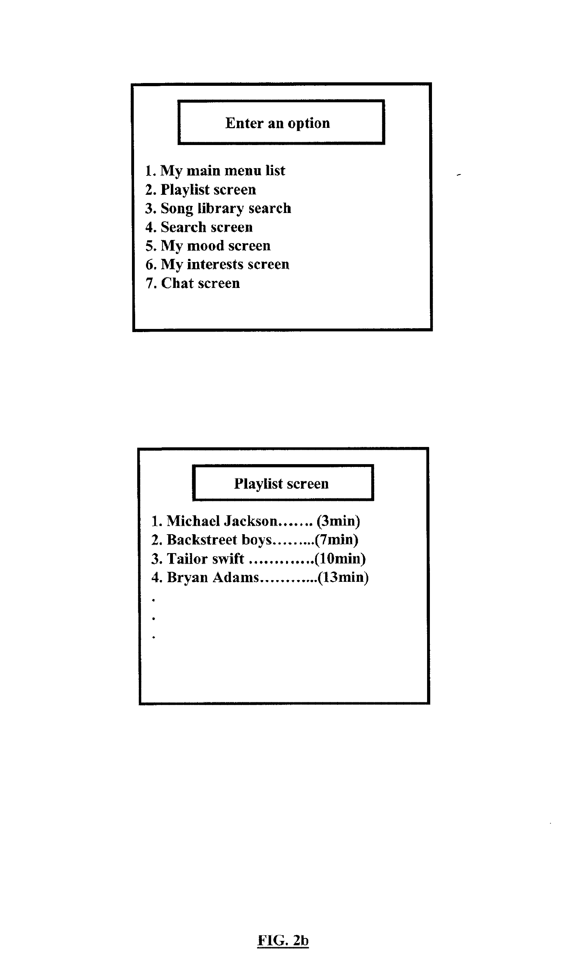

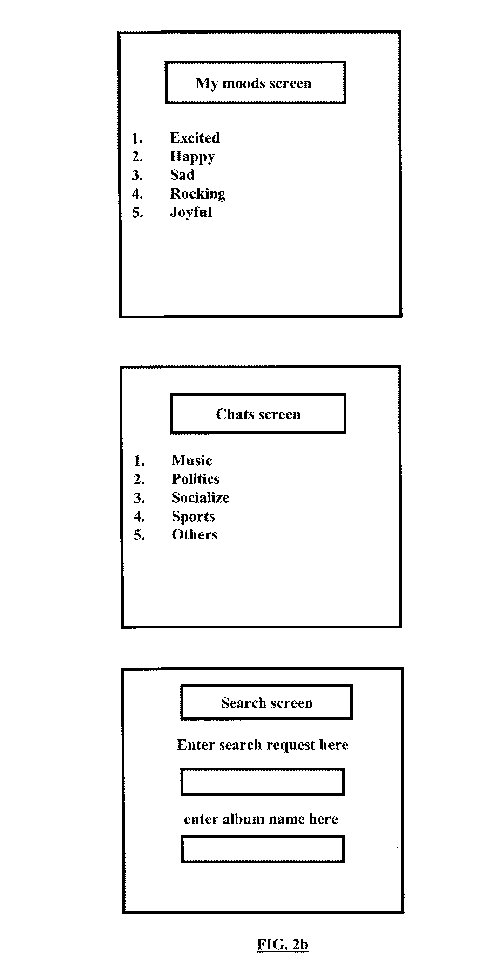

FIG. 2a illustrates architecture for multimedia communication module; FIGs 2b and 2c illustrate menu options, according to embodiments as disclosed herein. The multimedia communication module 101 comprises of graphical user interface module 201, an application module 202, a chat management module 203, a device scanner 204 and a database 205.

The Graphical User Interface module (GUI) 201 may provide displays and menu screens as depicted in FIGs 2b and 2c. The following screens may be displayed: Main Menu Screen: This displays the main menu options to the user like playlist, song library, search, my mood, my interests and chat. A Playlist screen display all the currently en queued songs in the multimedia communication module 101. It may also display the expected time of arrival for each song. The Song Library screen display all the songs available in the multimedia communication module 101 sorted based on album and artists. In the search screen: The user can enter multiple search queries and the responses to the queries come when the search either finishes or times out. My Mood Screen: On this screen the user is given choices for his current mood, like excited, joyful, lonely, neutral, etc. Further, the user may select some of the options. The information on the option selected is sent via the social layer to the multimedia communication module 101. The user is then presented with options to chat with like minded people in the chat screen. In My Interests screen, the user is allowed to choose the kind of music he/she likes and also what he/she may like to chat about, for e.g., politics, socializing, games, Hollywood, etc. This information may be sent via the chat management module 203 to the multimedia communication module 101 for finding like minded people. The chat screen displays the different chat rooms available to the user or allows the user to create one chat room. The user may enter a particular chat room and read all messages and also post into it. The user may also be presented with relevant chat rooms that the user may be interested in based on his moods and interests.

The application module 202 maintains the updated content relevant for displaying song listings, albums, currently playing song information, and so on. Application module 202 may accept requests from the user through the GUI 201 for selecting a song, browsing song library, searching for songs, and updates them on the multimedia communication module 101. The application module 202 may also receive responses from the users and sends the responses to users through the GUI module 201 for displaying the responses. When other users search for songs and if the requested song is not present in multimedia communication module 101, then application module 202 receives a local search request. The application module 202 performs a local search on the particular song and if present, it responds with the availability of the song. In an embodiment, a song may be present on the communication device 105 of another user, in that case the application module 202 asks for the permission of the user. If user grants access, the application module 202 uploads the song to the multimedia communication module 101. The application module 202 is equipped with application on the users hand-set that acts as the user interface to all the functionality of the proposed system. It provides a menu of the various functionalities such as searching, browsing, downloading, uploading content, and the user interacts with the system through this menu.

The chat management module 203 may maintain details of chat rooms available and is responsible for performing actions such as creating, leaving and joining the chat rooms for the user. The chat management module 203 may automatically notify in case a new message is posted in a particular chat room. The communication device 103, 104 or 105 gets updated automatically of all such new messages. The chat management module 203 is provided with intelligence to accept user's moods, interests and perform a detailed analysis to identify potential matches for users. Potential matches may be identified based on the percentage matching of user's interests. The chat management module 203 is configured for maintaining profile of every user's content, usage pattern based on history of user's interaction with the content and system. The chat management module 203 tracks history of user's interactions such as content items searched, browsed, viewed in the past by the user, content recommended by the user to other users and ratings provided by the user to various content items. The multimedia communication module 101 may then send back to the user potential matches of users with similar tastes. The multimedia communication module 101 may even invite users with similar interests for a chat session by forming such discussion forums on the fly. The system can also figure out people with similar taste of music and potentially group them together. Other modules interact with this module for updating and checking similar people suggestions.

Further, based on the profiles built as above, the chat management module 203 may use existing content recommendation systems to suggest content items of interest. The recommendation system can make use of individual content profiles for example, if the user often listens to certain categories of videos, profiles of other users he often talks to or shares interests. In an example, if user X and user Y give similar ratings to content, and if user X gave good rating to a content item, recommend it to user Y and so on. The chat management module 203 then compares the profiles of users to identify matching users, groups (for organizing chat among multiple users) and common content of interest. This matching is done by matching individual content profiles for example, user A with user B. Matching history of interactions with other users for example, matching users who interact with same set of other users and the like.

The device scanner 204 performs a scan to determine if there are any new communication devices 103, 104 and 105 in the range. The scan is performed using Bluetooth, Wi-Fi or a similar technology. If any devices are in range, a connection may be established. The device scanner 204 then pushes an application onto the communication device 103, 104 or 105. The options input by a user may be sent to other modules by the device scanner 204. The device scanner 204 may also give an indication if the connection to different communication devices 103, 104 and 105 is available or broken.

The database 205 may store information on the multimedia content available on the multimedia communication module101. The database 205 may also store details on user interests, music tastes of user or other details such that it can be discussed in the chat rooms.

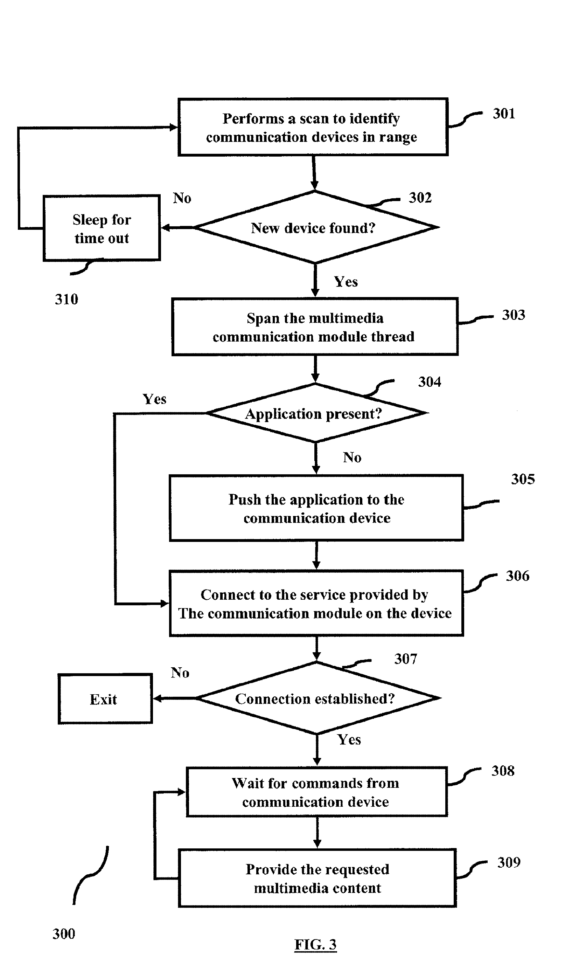

FIG. 3 depicts a flow chart for a method of accessing multimedia content, according to embodiments as disclosed herein. Consider a case wherein a user of a communication device is near the range of the multimedia communication module 101. The multimedia communication module continuously performs (301) a scan in order to detect any communication devices in its range. The device scanner 204 in the multimedia communication module 101 performs the scan. The communication device 103 may be detected by means such as Bluetooth, Wi-Fi or Infrared means. In case the communication device 103 is a mobile phone, when the user turns on his Bluetooth, the mobile phone 103 is detected by the multimedia communication module 101. The multimedia communication module 101 makes a check (302) to determine if any devices are in range. In case there are no communication devices 103 in range, it enters (310) into sleep mode until a time out occurs. Further, when time out occurs, the multimedia communication module 101 continues with the scanning process (step 301). If in step 301, any new communication device 103 is detected in range, the multimedia communication module 101 is spawned (303). The multimedia communication module 101 then makes a check (304) to determine if the application that supports content transfer is present on the device detected in its range. If the application is present, the process moves to step 306. In case the application is not present, the multimedia communication module 101 then pushes (305) an application onto the communication device 103 of the user. The application is installed on the communication device 103 of the user and a connection is established (306) between the communication device 103 and the multimedia communication module 101. A check is made (307) in order to ensure that the connection is established. In case there is some problem in establishment of the connection the process exits.

When the connection is established, the multimedia communication module 101 waits (308) for commands to be received from the communication device 103. The user is provided with a menu for making his choice of content. The menu may include items such as playlists, song library, chat rooms and the like. The user can also input details regarding his interests, his current mood and so on. Based on the input obtained from the user the multimedia communication module 101 performs an analysis to extract user requested content. The content is provided (309) to the user on a multimedia output module 102. In an example, user may request for top 20 songs in the playlist, or currently played songs from the playlist, or list of topics available for discussion in the chat rooms and so on. The user request is processed by the multimedia communication module 101 and it makes available the requested song if it is available in the multimedia communication module 101. In case the requested song or content is not available on the multimedia communication module 101, the multimedia communication module 101 searches for the content on other communication devices 104 or 105. If the song is available on other communication devices 104 or 105 the song is provided to the user by playing it on a multimedia output module 102. On the other hand, if the song is not available even on any other communication devices 104 or 105 that are connected to the multimedia communication module 101, the multimedia communication module 101 may extract the song from the internet 107 or from any other server by sending a request. The multimedia server 106 extracts the requested song from the internet 107 and makes it available to multimedia communication module 101. The song is then played in the multimedia output module 102.

In an embodiment, the multimedia communication module 101 is provided with an algorithm in order to categorize users based on their input statistics. For example, if a user requests for pop songs and another user makes a request for albums of Michael Jackson. The multimedia communication module 101 determines that both the users have like interests as the nature of albums of Michael Jackson fall under the category of pop songs. The multimedia communication module 101 may then send a chat invitation to both the users to enable them have a chat on their common interest i.e., pop music in the case. The method also allows users to create new chat groups with new chat topics other than that suggested by the multimedia communication module 101. In addition, multimedia communication module 101 can also store user requested song and song information and provide a notification to the user regarding the same. The multimedia communication module 101 may also access content available on the communication devices 103, 104 or 105 and store the content if the user's of communication devices 103, 104 or 105 permit. The whole process of interaction is private and no user at any point in time can know about any other user unless they wish to explicitly share their information. The multimedia communication module 101 does not store profiles of user, as a result once the user is out of the range his information is no longer available. This helps in maintaining privacy of the users. The various actions in method 300 may be performed in the order presented, in a different order or simultaneously. Further, in some embodiments, some actions listed in FIG. 3 may be omitted.

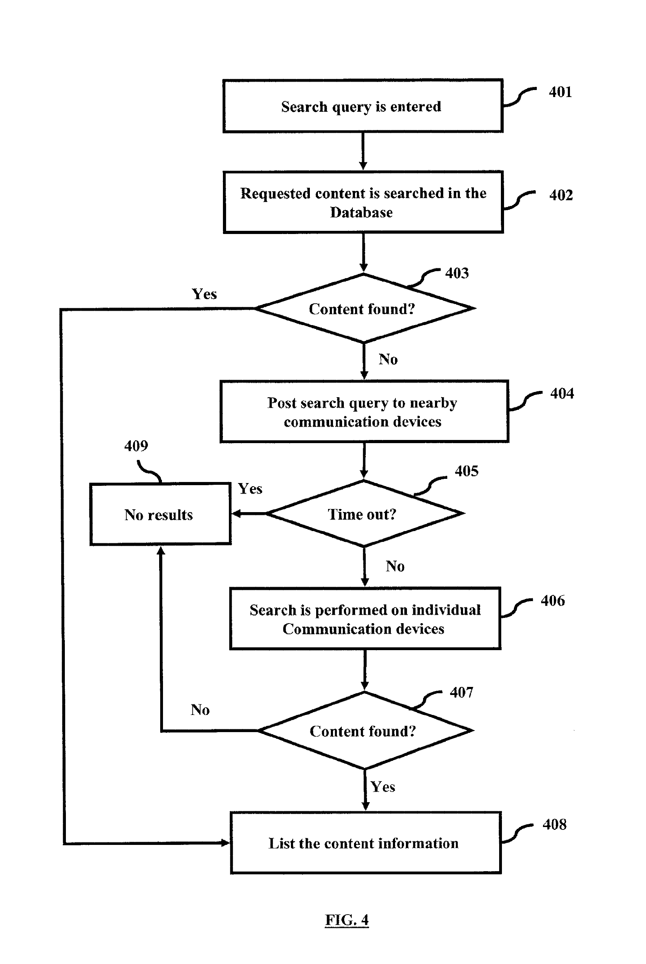

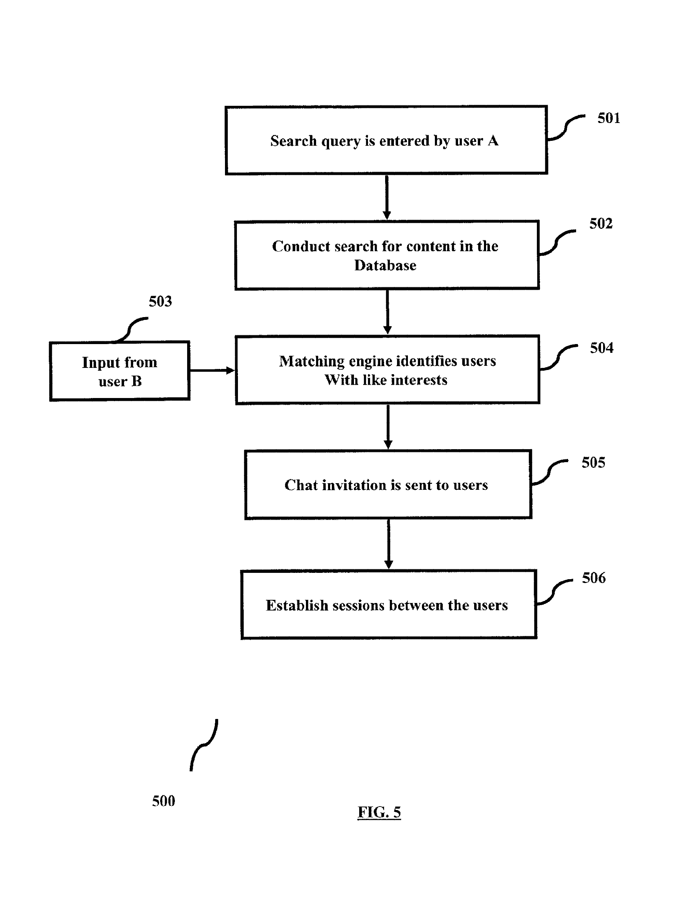

FIG. 4 depicts a flow chart for obtaining multimedia content based on user requests, according to embodiments as disclosed herein. Consider a situation wherein a user of a mobile device 103 is in a café and wishes to listen to music. The user may opt to listen to the music being played at the café or may want to listen to some specific track. The user may send (401) a request for the kind of song preferred by him to the multimedia communication module 101. The request may be sent in the form of a query for searching. In an example, consider that user makes a request for a Ghazal sung by XYZ. On receiving the request, the multimedia communication module 101 may conduct a search (402) in the database records, playlists, and song library of the café if the request is available. A check (403) may be made if the requested song is found. In case the song is found, the multimedia communication module 101 may extract the song and play it for the user. The song may be played on a multimedia output module 102. Also, song information may be provided. If the requested song is not available in the database records, playlists, and song library of the café the multimedia communication module 101 may post (404) the search request to near by communication device 104 and 105 that are connected to the multimedia communication module 101. On posting the search request, the multimedia communication module 101 may check (405) if time out occurred. In case time out occurred, a message may be displayed (410) stating results not found. If time out does not occur, the searching is continued (406) on nearby communication devices 104 or 105. If the song is found on other communication device 104 or 105 the song and its information may be provided to the user. On the other hand, if the song is not available on other communication devices 104 or 105 a message may be provided to the user stating (410) results not found. The various actions in method 400 may be performed in the order presented, in a different order or simultaneously. Further, in some embodiments, some actions listed in FIG. 5 may be omitted.

FIG. 5 depicts a flow chart for a method for inviting users with similar interests for chat sessions, according to embodiments as disclosed herein. Consider a scenario for matching users based on their moods or interests. The system may analyze user's moods based on the information input by the user. Users may be in positive moods such as excited, joyful, happy or in negative moods like sad, lonely, and depressed or may be in a neutral mood. User may opt to listen to the music based on his mood. A user A may enter (501) a search query on his mobile device 103 for requesting particular song say rock music. The request may be sent to the multimedia communication module 101. The multimedia communication module 101 may conduct (502) a search in its database 205 if the requested song is present in the database 205. Meanwhile, another request (503) may be received from another user B from a mobile device 104. The user B may be requesting for a latest rock song. The matching engine on the multimedia communication module 101 contains an algorithm for identification of users with similar interests and categorizing the users. The matching engine examines the inputs of both user A and user B and determines (504) that they have a liking for rock music. In another example, if a user C is lonely and he may be interested in joining a chat room with people who are excited so that they can share their excitement with him. He may send a message to the multimedia communication module 101 indicating the device of his mood. The multimedia communication module 101 may then send a message to the chat management module 203. The chat management module 203 may send (505) a chat invitation to the users with similar interests inviting them for a chat session. If the users are interested in joining the chat session they may accept the invitation and the session may be established (506). The various actions in method 500 may be performed in the order presented, in a different order or simultaneously. Further, in some embodiments, some actions listed in FIG. 5 may be omitted.

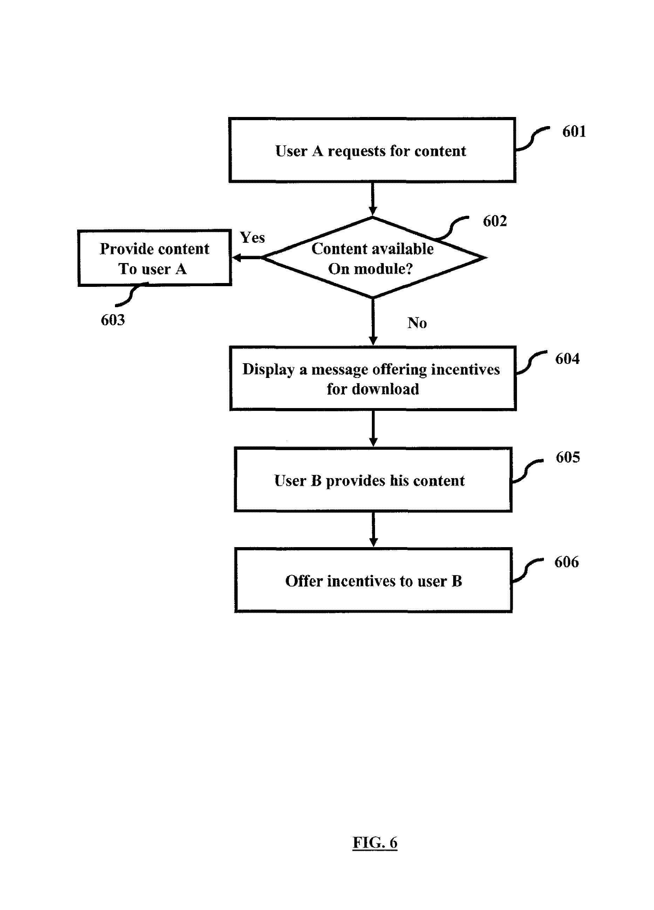

FIG. 6 depicts a flow chart for a method of offering incentives to users, according to embodiments as disclosed herein. Consider user A is at a coffee shop. User A may make (601) a request for a song say XYZ. The song request is sent to the multimedia communication module 101. A check (602) may be made if the content is available on the multimedia communication module 101. In case the content is available on the multimedia communication module 101, the content may be provided (603) to the user A. On the other hand, if the content is not available on the multimedia communication module, a message may be displayed (604) at the display provided at the coffee shop. The displayed message may offer incentives if a user is willing to offer his songs for download. The incentives may be discounts on the bill, gift coupons and the like. In any instance another user B who is in the same coffee shop has the requested song that is put up on the display and he may wish to offer his collection of songs for download. User B songs may be downloaded (605) from his communication device and stored in the playlist at the multimedia communication module 101. User B may then be provided (606) the promised incentives. The various actions in method 600 may be performed in the order presented, in a different order or simultaneously. Further, in some embodiments, some actions listed in FIG. 6 may be omitted.

The embodiments disclosed herein can be implemented through at least one software program running on at least one hardware device and performing network management functions to control the network elements. The network elements shown in Fig. 1 and 2 include blocks which can be at least one of a hardware device, or a combination of hardware device and software module.

The embodiment disclosed herein specifies a system for accessing collaborative multimedia content from a multimedia communication module. The mechanism allows to access multimedia content by providing a method thereof. Therefore, it is understood that the scope of the protection is extended to such a program and in addition to a computer readable means having a message therein, such computer readable storage means containing program code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The method embodiments described herein could be implemented in pure hardware or partly in hardware and partly in software. The device may also include only software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

1. A multimedia communication module (101) for accessing collaborative multimedia content, said module (101) configured for
detecting a plurality of users who are in the vicinity of said module (101); determining interests of said users on receiving a request for multimedia content from said users;
fetching said requested multimedia content from at least one source; and
sending said fetched multimedia content to a multimedia output module (102) to output said content.

2. The multimedia communication module (101) as in claim 1, wherein said module (101) is further configured for detecting users in the vicinity employing a device scanner (204).

3. The multimedia communication module (101) as in claim 1, wherein said module (101) is further configured for determining interests of said users based on one of moods input by said user in the menu, type of content requested by said user.

4. The multimedia communication module (101) as in claim 1, wherein said module (101) is further configured for fetching said multimedia content from at least one source wherein said source is one of a second user's device, internet, playlist, and server.

5. The multimedia communication module (101) as in claim 1, wherein said output device is at least one of a mobile phone, Personal Data Assistant (PDA), Laptop, speaker, headphone, television.

6. The multimedia communication module (101) as in claim 1, wherein said module (101) is further configured for sending said multimedia content wherein said multimedia content is one of audio, video, animation, data.

7. The multimedia communication module (101) as in claim 1, wherein said module (101) is further configured for categorizing users based on similar interests and inviting said users for chat sessions.

8. The multimedia communication module (101) as in claim 7, wherein said module (101) is further configured for inviting said users for said chat sessions where said chat sessions are created on the fly.

9. A method for accessing collaborative multimedia content, said method adapted for
detecting by a multimedia communication module (101) a plurality of users who are in the vicinity of said module;
determining by said multimedia communication module (101) interests of said users on receiving a request for multimedia content from said users;
fetching by said multimedia communication module (101) said requested multimedia content from at least one source; and
sending by said multimedia communication module (101) said fetched multimedia content to said multimedia output module (102) to output said content.

10. The method as in claim 9, wherein said method is further adapted for determining interests of said users based on one of moods as input by said user in the menu, type of content requested by said user.

11. The method as in claim 9, wherein said method is further adapted for fetching said multimedia content from at least one source wherein said source is one of a second user's device, internet, playlist, and server.

12. The method as in claim 9, wherein said output device is at least one of a mobile phone, Personal Data Assistant (PDA), Laptop, speaker, headphone, television.

13. The method as in claim 9, wherein said method is further adapted for sending said multimedia content wherein said multimedia content is one of audio, video, animation, data.

14. The method as in claim 9, wherein said method is further adapted for categorizing users based on similar interests and inviting said users for chat sessions.

15. The method as in claim 14, wherein said method is further adapted for inviting said users for said chat sessions where said chat sessions are created on the fly.
